# EUROPÄISCHE PATENTSCHRIFT

(11) **EP 4 239 229 B1**
(45) Veröffentlichungstag und Bekanntmachung des Hinweises auf die Patenterteilung: **11.06.2025**
(21) Anmeldenummer: 23157473.2
(22) Anmeldetag: 20.02.2023
(51) Int. Cl.: F16J 15/3236, F16J 15/324, F16J 15/34

(54) **AXIALDICHTRING**
AXIAL SEALING RING
BAGUE D'ÉTANCHÉITÉ AXIALE

(30) Priorität: 03.03.2022 DE 102022105003
(43) Veröffentlichungstag der Anmeldung: 06.09.2023
(73) Patentinhaber: Carl Freudenberg KG, 69469 Weinheim (DE)
(72) Erfinder: Ilinseer, Albert, 21220 Seevetal (DE)

(56) Entgegenhaltungen:
- EP-A1- 3 508 762
- DE-C1- 4 401 567
- US-A- 5 209 256

## Beschreibung

### Technisches Gebiet

Die Erfindung betrifft einen Axialdichtring, umfassend zwei in axialer Richtung mit Abstand zueinander benachbart angeordnete Stirnseiten, wobei die erste Stirnseite als ringförmige statische Dichtung und die zweite Stirnseite als ringförmige dynamische Dichtung mit zumindest einer dynamisch beanspruchten Dichtlippe ausgebildet ist, wobei die dynamische Dichtung bezogen auf die statische Dichtung in radialer Richtung exzentrisch angeordnet ist, mit einer asymmetrischen Verschiebung der dynamisch beanspruchten Dichtlippe bezogen auf die statische Dichtung.

### Stand der Technik

Axialdichtringe sind allgemein bekannt und gelangen zur gegenseitigen Abdichtung von zwei Maschinenelementen zur Anwendung.

Die beiden Maschinenelemente sind in axialer Richtung mit Abstand zueinander benachbart angeordnet, wobei durch den Abstand ein Dichtspalt gebildet ist. Die beiden Maschinenelemente rotieren relativ zueinander, wobei der Axialdichtring mit seiner statischen Dichtung in einem Einbauraum von einem der Maschinenelemente angeordnet ist und das andere Maschinenelement mit der dynamisch beanspruchten Dichtlippe seiner dynamisch beanspruchten Dichtung unter axialer Vorspannung dichtend berührt.

Bei Axialdichtringen, bei denen die statische Dichtung und die dynamische Dichtung mit ihrer dynamisch beanspruchten Dichtlippe konzentrisch zueinander angeordnet sind, läuft die dynamisch beanspruchte Dichtlippe während der bestimmungsgemäßen Verwendung deshalb immer auf derselben Laufspur.

Dabei ist von Nachteil, dass die Schmierung der dynamische beanspruchten Dichtlippe wenig zufriedenstellend ist, dadurch unerwünscht hohe Temperaturen entstehen und erhöhter Verschleiß, der zu einem frühzeitigen Ausfall des Axialdichtrings führen kann.

Ein Axialdichtring entsprechend dem Oberbegriff von Patentanspruch 1 ist aus der EP 3 508 762 A1 bekannt. Der Axialdichtring ist als Kassettendichtung ausgebildet und umfasst einen im Wesentlichen L-förmigen Schleuderring, der drehfest auf einer Welle angeordnet ist. Die Welle und der Schleuderring sind außenumfangsseitig von einem Gehäuse mit radialem Abstand umschlossen, wobei in dem durch den Abstand gebildeten Spalt der Dichtring angeordnet ist. Der Dichtring umfasst einen im Wesentlichen L-förmigen Stützring mit einem Radial- und einem Axialvorsprung, die einstückig ineinander übergehend ausgebildet sind. Der Dichtring weist zwei dynamisch beanspruchte Axialdichtlippen und eine Staublippe auf, die jeweils am Radialvorsprung angeordnet sind. Der Axialvorsprung ist außenumfangsseitig von einer statischen Dichtung umschlossen, die den Dichtring gegenüber dem Gehäuse abdichtet. Die beiden Axialdichtlippen sind, ausgehend von ihrem Wurzelbereich, am Radialvorsprung des Stützkörpers radial nach außen vorgewölbt ausgebildet.

Der Schleuderring bildet den Laufring für die beiden Axialdichtlippen. Die Welle und der Schleuderring sind, bezogen auf den im Gehäuse angeordneten Dichtring, exzentrisch zueinander angeordnet.

### Darstellung der Erfindung

Der Erfindung liegt die Aufgabe zu Grunde, einen Axialdichtring der eingangs genannten Art derart weiterzuentwickeln, dass dieser verbesserte Gebrauchseigenschaften während einer längeren Gebrauchsdauer aufweist. Insbesondere sollen die Gebrauchseigenschaften und die Gebrauchsdauer der dynamisch beanspruchten Dichtlippe verbessert werden. Die mechanische Belastung auf die Dichtlippe soll reduziert sein.

Diese Aufgabe wird erfindungsgemäß durch einen Axialdichtring mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist ein Axialdichtring vorgesehen, umfassend zwei in axialer Richtung mit Abstand zueinander benachbart angeordnete Stirnseiten, wobei die erste Stirnseite als ringförmige statische Dichtung und die zweite Stirnseite als ringförmige dynamische Dichtung mit zumindest einer dynamisch beanspruchten Dichtlippe ausgebildet ist, wobei die dynamische Dichtung bezogen auf die statische Dichtung in radialer Richtung exzentrisch angeordnet ist, mit einer asymmetrischen Verschiebung der dynamisch beanspruchten Dichtlippe bezogen auf die statische Dichtung, und wobei die dynamisch beanspruchte Dichtlippe radial nach innen vorgewölbt ausgebildet ist.

Die Exzentrizität wird dadurch erreicht, dass die dynamisch beanspruchte Dichtlippe bezogen auf die statische Dichtung asymmetrisch verschoben ist. Hierbei ist von Vorteil, dass die asymmetrische Geometrie des Axialdichtrings zu einer verbesserten Schmierung der dynamisch beanspruchten Dichtlippe durch eine Verbreiterung der Laufspur der Dichtlippe auf einem abzudichtenden Maschinenelement führt. Durch die verbesserte Schmierung ist die Wärmeableitung aus der Dichtlippe während der bestimmungsgemäßen Verwendung des Axialdichtrings verbessert und dadurch die Gebrauchsdauer.

Die ringförmige statische Dichtung wird symmetrisch hergestellt, die dynamisch beanspruchte Dichtlippe, die zur ringförmigen dynamischen Dichtung gehört, demgegenüber asymmetrisch.

Wie zuvor bereits ausgeführt, bewirkt die asymmetrische Verschiebung eine Verbreiterung der Laufspur. Dadurch gelangt bei jeder Umdrehung der Dichtlippe relativ zum abzudichtenden Maschinenelement abzudichtendes Medium zur Schmierung aktiv unter die dynamisch beanspruchte Dichtlippe. Die asymmetrische Dichtlippe läuft immer auf einer durch das abzudichtende Medium frisch geschmierten Laufspur.

Bei dem abzudichtenden Medium handelt es sich bevorzugt um einen Schmierstoff.

Durch die wesentlich größere Laufspurbreite, bezogen auf symmetrisch ausgebildete Axialdichtringe, und die stets frisch geschmierte Laufspur ist außerdem von Vorteil, dass die Laufspur auf der Lauffläche des abzudichtenden Maschinenelements, auf der die dynamisch beanspruchte Dichtlippe läuft, auch während einer langen Gebrauchsdauer, wenn überhaupt, nur einen sehr geringen Einlauf aufweist.

Die dynamisch beanspruchte Dichtlippe ist radial nach innen vorgewölbt ausgebildet. Es handelt sich dann um eine innendichtende Variante des Axialdichtrings. Dadurch weist die dynamische beanspruchte Dichtlippe einen kleineren Durchmesser auf, als wäre sie radial nach außen vorgewölbt. Durch die Vorwölbung radial nach innen ist die Umfangsgeschwindigkeit von der dynamisch beanspruchten Dichtlippe und der Dichtfläche des abzudichtenden Maschinenelements relativ zueinander nur vergleichsweise gering. Die mechanischen Belastungen auf die Dichtlippe sind entsprechend reduziert.

Nach einer vorteilhaften Ausgestaltung kann es vorgesehen sein, dass die asymmetrische Verschiebung in radialer Richtung 0,01 mm bis 20 mm, weiter bevorzugt 0,1 mm bis 1 mm beträgt.

Für viele Durchmesserbereiche von Axialdichtringen ist eine derartige asymmetrische Verschiebung zielführend, um die zuvor beschriebenen vorteilhaften Gebrauchseigenschaften zu erreichen.

Die statische und die dynamische Dichtung sind bevorzugt einstückig ineinander übergehend und materialeinheitlich ausgebildet. Eine solche Ausgestaltung bewirkt eine einfache und kostengünstige Herstellung. Außerdem ist von Vorteil, dass solche Axialdichtringe im Anschluss an ihre Verwendung sortenrein recyclebar sind.

Zur Abdichtung eines Einbauraums, in dem der Axialdichtring eingebaut ist, kann es vorgesehen sein, dass die statische Dichtung zumindest eine statisch beanspruchte Dichtlippe aufweist, die auf der der dynamischen Dichtung axial abgewandten Seite der statischen Dichtung angeordnet ist. Während der bestimmungsgemäßen Verwendung des Axialdichtrings ist dieser unter axialer Vorspannung dichtend in seinem Einbauraum zwischen den gegeneinander abzudichtenden Maschinenelementen angeordnet.

Die dynamisch beanspruchte Dichtlippe und die statisch beanspruchte Dichtlippe liegen bevorzugt jeweils etwa in derselben Axialebene. Kippmomenten des Axialdichtrings im Einbauraum wird dadurch vorgebeugt.

### Kurzbeschreibung der Zeichnung

Ein Ausführungsbeispiel eines erfindungsgemäßen Axialdichtrings wird nachfolgend anhand der Figuren 1 bis 4 näher erläutert.

Diese zeigen jeweils in schematischer Darstellung:
- Figur 1: eine Schnittdarstellung eines ersten Ausführungsbeispiels des erfindungsgemäßen Axialdichtrings in seinem herstellungsbedingten Zustand,
- Figur 2: eine Ansicht des Axialdichtrings aus Figur 1 von vorn,
- Figur 3: eine Dichtungsanordnung, in der der Axialdichtring aus Figur 1 zur Abdichtung von zwei gegeneinander abzudichtenden Maschinenelementen zur Anwendung gelangt,
- Figur 4: eine Ansicht des Axialdichtrings aus den Figuren 1 und 3 von vorn, mit eingezeichneter Laufspur auf der Lauffläche des zweiten Maschinenelements aus Figur 3,

### Ausführung der Erfindung

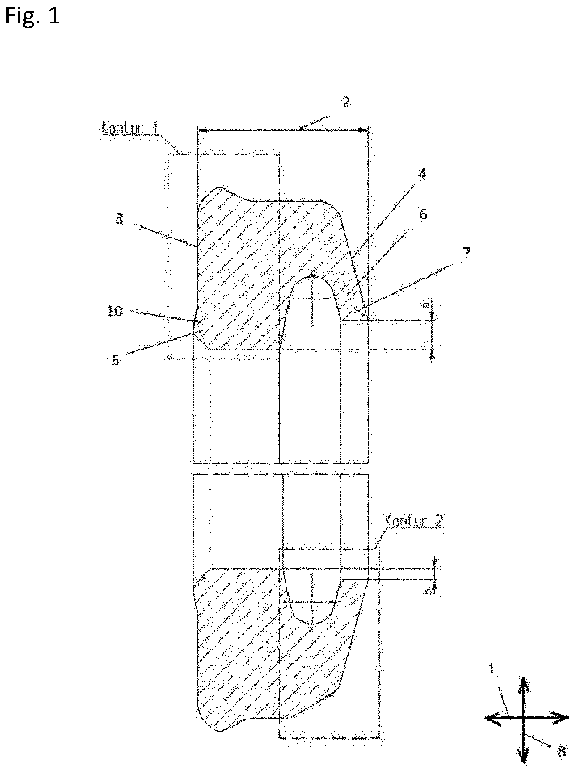

In den Figuren 1 bis 4 ist ein erstes Ausführungsbeispiel des erfindungsgemäßen Axialdichtrings gezeigt.

Die dynamisch beanspruchte Dichtlippe 7 ist radial innendichtend.

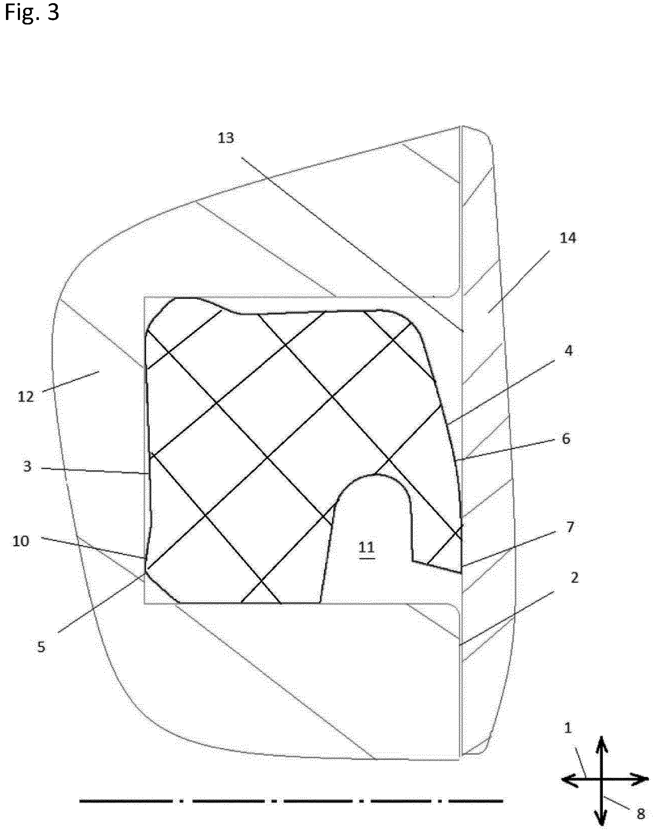

Der Axialdichtring hat zwei in axialer Richtung 1 mit Abstand 2 zueinander benachbart angeordnete Stirnseiten 3, 4. Die erste Stirnseite 3 ist als ringförmige statische Dichtung 5 ausgebildet, mit der der Axialdichtring dichtend innerhalb des Einbauraums 11 des ersten Maschinenelements 12 (dargestellt in Figur 3) angeordnet ist.

Die zweite Stirnseite 4 ist demgegenüber als ringförmige dynamische Dichtung 6 ausgebildet und weist die dynamisch beanspruchte Dichtlippe 7 auf, die während der bestimmungsgemäßen Verwendung des Axialdichtrings unter axialer Vorspannung dichtend an der Lauffläche 13 des zweiten Maschinenelements 14 anliegt.

Im hier gezeigten Ausführungsbeispiel beträgt die asymmetrische Verschiebung 9 von statischer Dichtung 5 und dynamisch beanspruchter Dichtlippe 7 der dynamischen Dichtung 6 relativ zueinander etwa 0,5 mm bei einem Durchmesser des Axialdichtrings von etwa 350 mm.

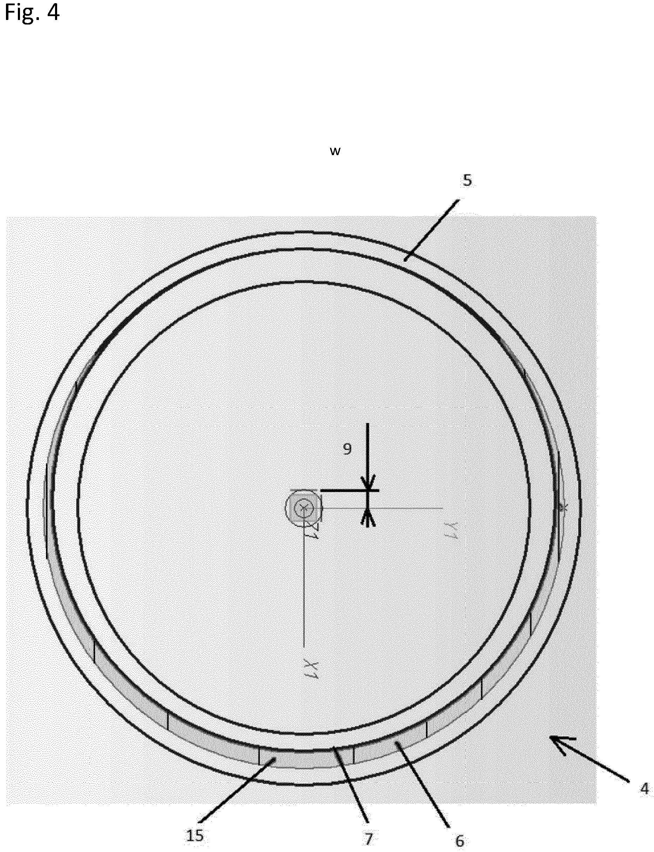

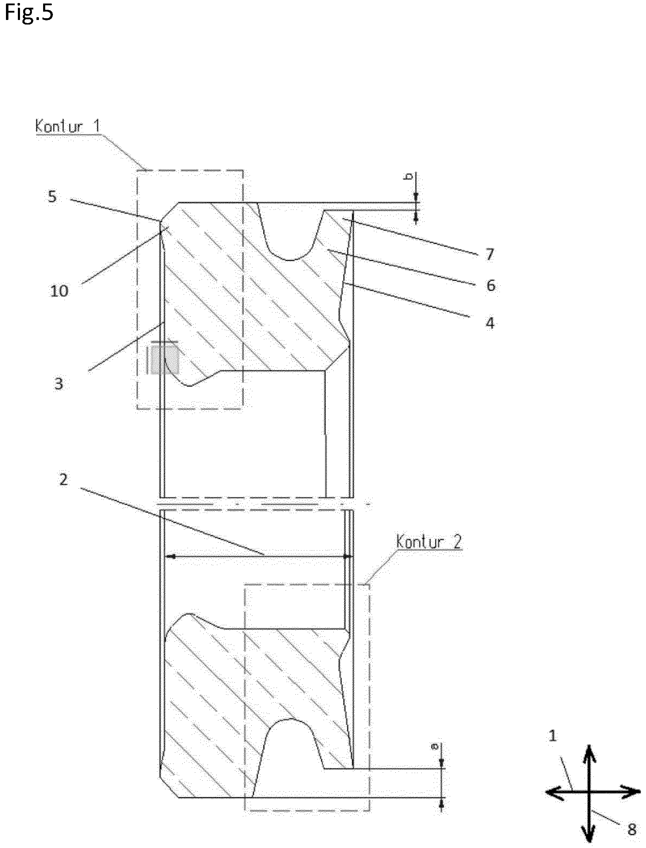

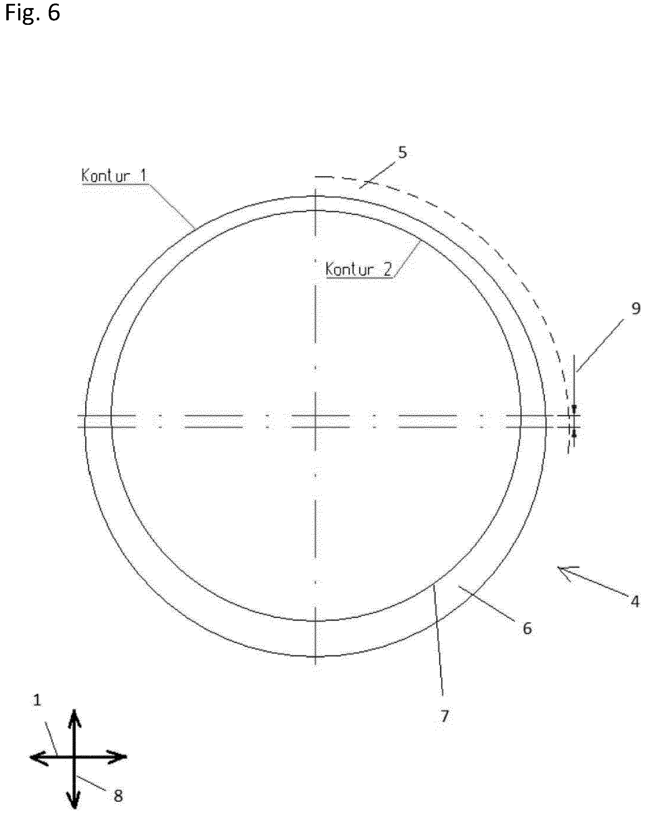

Die statische Dichtung 5 und die dynamische Dichtung 6 sind in radialer Richtung 8 um die asymmetrische Verschiebung 9 exzentrisch zueinander angeordnet. Dadurch wird die dynamisch beanspruchte Dichtlippe 7 während der bestimmungsgemäßen Verwendung des Axialdichtrings aktiv geschmiert. Die Exzentrizität der dynamisch beanspruchten Dichtlippe 7 zur statischen Dichtung 5 bewirkt eine Verbreiterung der Laufspur 15 auf der Lauffläche 13 des zweiten Maschinenelements 14 (dargestellt in den Figuren 3 und 4), eine bessere Wärmeableitung, weniger Verschleiß und dadurch eine längere Gebrauchsdauer des Axialdichtrings.

Bei jeder Umdrehung der Lauffläche 13 relativ zur dynamisch beanspruchten Dichtlippe 7 wird diese durch neues abzudichtendes Medium auf der verbreiterten Laufspur 15 aktiv geschmiert.

Die statische Dichtung 5 weist auf der der dynamischen Dichtung 6 axial abgewandten Seite eine statisch beanspruchte Dichtlippe 10 auf, mit der die statische Dichtung 5, wie in Figur 3 dargestellt, innerhalb ihres Einbauraums 11 unter elastischer axialer Vorspannung dichtend angeordnet ist.

In Figur 1 ist der Axialdichtring in seiner herstellungsbedingten Form geschnitten dargestellt.

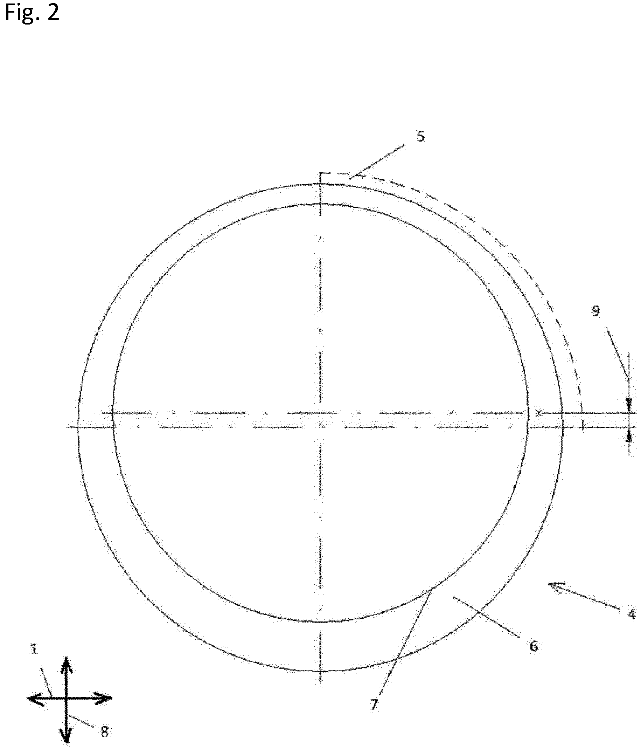

In Kombination mit der Darstellung Figur 2, die den Axialdichtring aus Figur 1 in einer Ansicht von rechts zeigt, ist die exzentrische Anordnung der dynamisch beanspruchten Dichtlippe 7 durch die asymmetrische Verschiebung 9 bezogen auf die statische Dichtung 5 gut zu erkennen.

In Figur 3 ist eine Dichtungsanordnung gezeigt, in der der erfindungsgemäße Axialdichtring zur Anwendung gelangt. Das erste Maschinenelement 12 und das zweite Maschinenelement 14 sind einander in axialer Richtung 1 mit Abstand benachbart zugeordnet, wobei der axiale Abstand den Dichtspalt zwischen den Maschinenelementen 12, 14 bildet. Der Einbauraum 11 ist Bestandteil des ersten Maschinenelements 12, in dem die statische Dichtung 5 unter elastischer radialer und axialer Vorspannung dichtend angeordnet ist.

Die dynamisch beanspruchte Dichtlippe 7, die in radialer Richtung 8 nach innen vorgewölbt ausgebildet ist, berührt die Lauffläche 13 des zweiten Maschinenelements 14 unter elastischer axialer Vorspannung dichtend.

Durch die Exzentrizität der dynamisch beanspruchten Dichtlippe 7 ergibt sich eine exzentrisch verbreiterte Laufspur 15 auf der Lauffläche 13. Das abzudichtende Medium wird zur aktiven Schmierung der dynamisch beanspruchten Dichtlippe 7 genutzt. Bei jeder Umdrehung der dynamisch beanspruchten Dichtlippe 7 auf der Laufspur 15 überstreicht die dynamisch beanspruchte Dichtlippe 7 neues abzudichtendes Medium. Der beanspruchte Axialdichtring weist deshalb gleichbleibend gute Gebrauchseigenschaften während einer langen Gebrauchsdauer auf.

## Patentansprüche

1. Axialdichtring, umfassend zwei in axialer Richtung (1) mit Abstand (2) zueinander benachbart angeordnete Stirnseiten (3, 4), wobei die erste Stirnseite (3) als ringförmige statische Dichtung (5) und die zweite Stirnseite (4) als ringförmige dynamische Dichtung (6) mit zumindest einer dynamisch beanspruchten Dichtlippe (7) ausgebildet ist, wobei die dynamische Dichtung (6) bezogen auf die statische Dichtung (5) in radialer Richtung (8) exzentrisch angeordnet ist, mit einer asymmetrischen Verschiebung (9) der dynamisch beanspruchten Dichtlippe (7) bezogen auf die statische Dichtung (5), **dadurch gekennzeichnet, dass** die dynamisch beanspruchte Dichtlippe (7) radial nach innen vorgewölbt ausgebildet ist.

2. Axialdichtring nach Anspruch 1, **dadurch gekennzeichnet, dass** die asymmetrische Verschiebung (9) in radialer Richtung (8) 0,01 mm bis 20 mm beträgt.

3. Axialdichtring nach Anspruch 2, **dadurch gekennzeichnet, dass** die asymmetrische Verschiebung (9) 0,1 mm bis 1 mm beträgt.

4. Axialdichtring nach einem der Ansprüche 1 bis 3, **dadurch gekennzeichnet, dass** die statische (5) und die dynamische Dichtung (6) einstückig ineinander übergehend und materialeinheitlich ausgebildet sind.

5. Axialdichtring nach einem der Ansprüche 1 bis 4, **dadurch gekennzeichnet, dass** die statische Dichtung (5) zumindest eine statisch beanspruchte Dichtlippe (10) aufweist, auf der der dynamischen Dichtlippe (6) axial abgewandten Seite der statischen Dichtung (5).

## Claims

1. Axial sealing ring comprising two end faces (3, 4) which are arranged adjacently at a distance (2) from one another in an axial direction (1), wherein the first end face (3) is configured as an annular static seal (5) and the second end face (4) is configured as an annular dynamic seal (6) with at least one dynamically loaded sealing lip (7), wherein the dynamic seal (6) is arranged eccentrically in a radial direction (8) in relation to the static seal (5), with an asymmetrical displacement (9) of the dynamically loaded sealing lip (7) in relation to the static seal (5), **characterized in that** the dynamically loaded sealing lip (7) is formed so as to be arched radially inwards.

2. Axial sealing ring according to Claim 1, **characterized in that** the asymmetrical displacement (9) in the radial direction (8) is 0.01 mm to 20 mm.

3. Axial sealing ring according to Claim 2, **characterized in that** the asymmetrical displacement (9) is 0.1 mm to 1 mm.

4. Axial sealing ring according to one of Claims 1 to 3, **characterized in that** the static seal (5) and the dynamic seal (6) are formed from the same material and so as to transition integrally into one another.

5. Axial sealing ring according to one of Claims 1 to 4, **characterized in that** the static seal (5) has at least one statically loaded sealing lip (10) on that side of the static seal (5) which faces axially away from the dynamic sealing lip (6).

## Revendications

1. Bague d'étanchéité axiale comprenant deux côtés frontaux (3, 4) disposés de manière espacée l'un de l'autre à une distance (2) dans la direction axiale (1), le premier côté frontal (3) étant réalisé comme un joint d'étanchéité statique (5) annulaire et le second côté frontal (4) étant réalisé comme un joint d'étanchéité dynamique (6) annulaire avec au moins une lèvre d'étanchéité (7) sollicitée dynamiquement, le joint d'étanchéité dynamique (6) étant disposé de manière excentrique dans la direction radiale (8) par rapport au joint d'étanchéité statique (5), avec un coulissement asymétrique (9) de la lèvre d'étanchéité (7) sollicitée dynamiquement par rapport au joint d'étanchéité statique (5), **caractérisée en ce que** la lèvre d'étanchéité (7) sollicitée dynamiquement est réalisée de manière bombée préalablement vers l'intérieur radialement.

2. Bague d'étanchéité axiale selon la revendication 1, **caractérisée en ce que** le coulissement asymétrique (9) va de 0,01 mm à 20 mm dans la direction radiale (8).

3. Bague d'étanchéité axiale selon la revendication 2, **caractérisée en ce que** le coulissement asymétrique (9) va de 0,1 mm à 1 mm.

4. Bague d'étanchéité axiale selon l'une des revendications 1 à 3, **caractérisée en ce que** le joint d'étanchéité statique (5) et le joint d'étanchéité dynamique (6) sont réalisés d'un seul tenant, en se fondant l'un dans l'autre, et dans le même matériau.

5. Bague d'étanchéité axiale selon l'une des revendications 1 à 4, **caractérisée en ce que** le joint d'étanchéité statique (5) comporte au moins une lèvre d'étanchéité (10) sollicitée statiquement, sur le côté axialement opposé à la lèvre d'étanchéité dynamique (6), du joint d'étanchéité statique (5).
